# EUROPÄISCHE PATENTSCHRIFT

(11) **EP 0 498 332 B1**
(45) Veröffentlichungstag und Bekanntmachung des Hinweises auf die Patenterteilung: **16.09.1998**
(21) Anmeldenummer: 92101707.5
(22) Anmeldetag: 03.02.1992
(51) Int. Cl.: A01N 25/14

(54) **Neue Pflanzenschutzmittel-Formulierungen**
New plant protection formulations
Formulations nouvelles pour la protection des plantes

(30) Priorität: 06.02.1991 DE 4103467; 22.08.1991 DE 4127757
(43) Veröffentlichungstag der Anmeldung: 12.08.1992
(73) Patentinhaber: Hoechst Schering AgrEvo GmbH, 13342 Berlin (DE)
(72) Erfinder: Heinrich, Rudolf, Dr., W-6233 Kelkheim (Taunus) (DE); Maier, Thomas, Dr., W-6000 Frankfurt am Main 71 (DE); Kocur, Jean, Dr., W-6238 Hofheim am Taunus (DE); Schlicht, Rainer, Dr., W-6277 Bad Camberg (DE)

(56) Entgegenhaltungen:
- DE-A- 1 542 902
- FR-A- 2 290 844
- FR-A- 2 398 455
- FR-A- 2 645 709
- GB-A- 2 013 610
- GB-A- 2 230 700
- US-A- 3 920 442
- CHEMICAL PATENTS INDEX, BASIC ABSTRACTS JOURNAL, Section Ch, Week 9022, 25 Juli 1990 Derwent Publications Ltd., London (GB); Class C, AN 167888
- CHEMICAL PATENTS INDEX, BASIC ABSTRACTS JOURNAL, Section Ch, Week 8514, 29 Mai 1985 Derwent Publications Ltd., London (GB); Class C, AN 84630

## Beschreibung

Die Erfindung betrifft wasseremulgierbare Granulate von Pflanzenschutzmitteln bestehend aus dem Wirkstoff in flüssiger oder gelöster Form und einem zumindest teilweise wasserlöslichen hüll- und strukturbildenden Material, deren Verwendung als neue, vorteilhafte Pflanzenschutzmittelformulierungen sowie Verfahren zu deren Herstellung.

Pflanzenschutzmittel kommen vorzugsweise in Form von emulgierbaren Konzentraten (EC), konzentrierten Emulsionen (EW), wäßrigen Dispersionen (SC) sowie Spritzpulvern (WP) in den Handel.

Zur Herstellung von Spritzbrühen werden die Mittel in Wasser eingetragen und z.B. unter Rühren appliziert. Jede dieser Zubereitungsformen hat Vor- und Nachteile und muß u.a. abgestimmt sein auf die physikalischen und chemischen Eigenschaften des Wirkstoffes, eine optimale biologische Wirkung, auf toxikologische Bedürfnisse sowie auf Handhabungssicherheit beim Anwender.

Spritzpulver führen z.B. bei der Herstellung und Anwendung zu lästiger Staubentwicklung und haben außerdem den Nachteil der schlechten volumetrischen Dosierung vor der Applikation. Emulgierbare Konzentrate enthalten aromatische Lösungsmittel, die leicht entflammbar, hautreizend oder geruchsbelästigend sein können.

Dispersionen können bei längeren Lagerzeiten schwer aufschüttelbare Sedimente geben. Ihre Herstellung ist auf vermahlbare Wirkstoffe beschränkt. Außerdem bestehen bei diesem Formulierungstyp oft Probleme bezüglich Entsorgung der Verpackungsmaterialien.

Diese Nachteile können durch die Verwendung einer neuen Formulierungsart, der in Wasser dispergierbaren Granulate (WG) weitgehend behoben werden. Diese Formulierungen sind freifließend, staubarm und volumetrisch gut dosierbar. Sie lassen sich problemlos in Polyethylenbehältern, Papptrommeln oder Klotzbodenbeuteln aus Verbundfolien verpacken, nach der Applikation gut entleeren und so leichter entsorgen, auch hinsichtlich des zu entsorgenden Packmittelvolumens.

Zur technischen Herstellung von wasserdispergierbaren Granulaten stehen zahlreiche Verfahren zur Verfügung (vgl. H. B. Ries "Granuliertechnik und Granuliergeräte" in Aufbereitungstechnik Nr. 3, 1970, S. 147 und M. Rosch u. R. Probst in Verfahrenstechnik 9 (1975), S. 59 bis 64).

Insbesondere ist die Herstellung von wasserdispergierbaren Granulaten nach dem Wirbelschicht-Verfahren bekannt, das im Gegenstrom und im Gleichstrom betrieben werden kann.

Die US-A-3920442 und GB-A-1401304 sowie M. Rosch u. R. Probst in Verfahrenstechnik 9 (1975), S. 59, beschreiben das Gegenstrom-Verfahren, während das Gleichstromverfahren in EP-A-26918, EP-A-141436 und EP-A-141437 sowie in Verfahrenstechnik 9 (1975), S. 61, 62 beschrieben ist. Um eine einwandfreie Anwendung zu gewährleisten, müssen wasserdispergierbare Granulate beim Eintragen in Wasser gut benetzt werden, möglichst spontan zerfallen und eine gute Suspension mit guter Schwebefähigkeit bilden.

In der DE-A-4013028 werden emulgierbare feste pestizide Mittel in Granulatform, die Dextrin und/oder Lactose enthalten und deren Herstellung in einem zweistufigen Verfahren (Sprühtrocknung und Granulierung) beschrieben.

Wichtigste Voraussetzung für die Verwendbarkeit eines wasserdispergierbaren Granulates in der Praxis ist jedoch eine ausreichende biologische Wirksamkeit, zu deren Optimierung im allgemeinen soviel Netzmittel zugesetzt wird, daß in den Spritzbrühen bei der Applikation Netzmittel-Konzentrationen von 0,2 bis 0,4 Gew.% vorliegen. Zu hohe Netzmittelmengen können bei selektiven Herbiziden zu Phytotoxis-Erscheinungen an Kulturpflanzen führen, zu geringe Netzmittel-Mengen können eine Minder-Wirkung herbeiführen. Außerdem kann bei der Verwendung zu hoher Netzmittelmengen in der Spritzbrühe eine zu starke Schaumbildung auftreten, die den Applikationsprozeß stören kann und auch nicht durch Antischaum-Mittel zu verhindern ist.

Aus EP-A-224845 ist bekannt, herbizide Wirkstoffe als sog. in Wasser suspendierbare Granulate (WG) zu formulieren und so die Nachteile bei der Verwendung von Spritzpulvern, wie z.B. die lästige Staubentwicklung vor der Applikation zu vermeiden. Es hat sich jedoch gezeigt, daß diese wassersuspendierbaren Granulate ohne den Einfluß des Lösungsmittels auf die Penetration des Wirkstoffes durch die Blattoberfläche nicht immer die optimale biologische Wirkung entfalten, beziehungsweise, daß durch zu hohe Netzmittelmengen die Kulturpflanzen geschädigt wurden. Auch traten in den meisten Fällen die oben beschriebenen Schwierigkeiten durch lästige Schaumentwicklung auf.

In DE-A-2805106 wird ferner beschrieben, flüssiges, wasserunlösliches Füllgut mit Hilfe von wasserlöslichen Polyvinylalkoholen im Sprühturm in Mikrokapselpulver mit einem Kapseldurchmesser von 1 bis 20 µm einzuschließen.

Außerdem ist aus dem GB-Patent 1305369 bekannt, pflanzliche Öle mit wasserlöslichen Polymeren wie Polyvinylalkohol oder Polyvinylpyrrolidon durch Sprühtrocknung zu umhüllen und Mikrokapseln mit einem Kapseldurchmesser von 0,6 µm zu erhalten.

Die beiden letztgenannten Verfahren führen jedoch nur zu sehr kleinen Mikropartikeln mit den bereits oben erwähnten Nachteilen der Staubbelästigung und schlechten volumetrischen Dosierung.

Weiterhin sind aus JP-A-02 108604 Granulate bekannt, die eine flüssige oder niedrigschmelzende Agrochemikalie, ggf. ein Lösungsmittel, ein Tensid und einen wasserlöslichen Träger enthalten.

In FR-A-2 645 709 wird ein Verfahren zur Herstellung von festen emulgierbaren Zubereitungen von niedrigschmelzenden Pflanzenschutzmittel beschrieben, bei welchem ein wasserlösliches Polyglykol und ggf. ein wasserlöslicher Träger zugesetzt werden.

FR-A-2 290 844 betrifft pestizide Granulate, die neben dem Wirkstoff ein Carbonat oder Bicarbonat, eine Säure oder ein saures Salz und einen niedermolekularen wasserlöslichen Träger enthalten.

Es bestand daher die Aufgabe, in Wasser emulgierbare Granulate herzustellen, die alle oben genannten Nachteile überwinden und zu einem freifließenden, nicht staubenden, volumetrisch gut dosierbaren, in Wasser emulgierbaren Produkt führen. Dieses Produkt muß außerdern beim Eintragen in Wasser gut benetzt werden, muß möglichst spontan in Lösung gehen und eine stabile Emulsion mit guten anwendungstechnischen Eigenschaften bilden.

Die Aufgabe wird gelöst durch eine Umhüllung der Wirkstoffe mit einer weitgehend indifferenten, filmbildenden und genügend schnell wasserlöslichen Substanz. Verschiedene Polyvinylalkoholtypen entsprachen den gestellten Anforderungen.

Überraschenderweise wurde nun gefunden, daß bei Verwendung bestimmter Polyvinylalkohol-Typen oder Gemischen derselben nach dem oben beschriebenen Wirbelschicht-Verfahren im Gegenstromprinzip in Wasser emulgierbare Granulate mit einem mittleren Partikeldurchmesser von 0,3 bis 5 mm, vorzugsweise 0,5 bis 2 mm entstehen, die nicht staubend, freifließend, volumetrisch gut dosierbar und in Wasser gut emulgierbar sind.

Diese Tatsache ist insofern überraschend, da nicht anzunehmen war, daß bei der obengenannten Versuchsanordnung die gewünschten Granulate entstehen, während die in DE-A-2805106 beschriebene Anordnung sowie die im GB-Patent 1305369 beschriebenen Versuche zu Partikeln mit einer Größe von 0,5 bzw. 0,6 bis 20 µm führten. Überraschend war außerdem, daß die so hergestellten wasseremulgierbaren Granulate die gleiche bzw. in einigen Fällen sogar eine leicht bessere biologische Wirkung zeigten als die entsprechenden emulgierbaren Konzentrate.

Die Erfindung betrifft daher in Wasser emulgierbare Granulate, mit einem mittleren Partikeldurchmesser von 0,3 bis 5 mm, die
a) 2 bis 70 Gew.-%, vorzugsweise 10 bis 40 Gew.-% mindestens eines in Wasser nicht oder nur gering löslichen pestiziden Wirkstoffs,
b) 20 bis 80 Gew.-%, vorzugsweise 20 bis 60 Gew.-%, eines hochsiedenden Lösungsmittels oder Lösungsmittelgemisches, vorzugsweise aus der Gruppe der mehrkernigen Aromaten,
c) 10 bis 80 Gew.-%, vorzugsweise 30 bis 60 Gew.-%, eines zumindest teilweise wasserlöslichen hüll- und strukturbildenden Materials, das im wesentlichen aus einem durch Teilverseifung von Polyvinylacetat erhaltenen Polyvinylalkohol mit einem Hydrolysegrad von 72 bis 99 Mol.-% und einer Viskosität von 2 bis 18 cP gemessen in 4 %iger wäßriger Lösung bei 20°C oder einem Gemisch solcher Polyvinylalkohole besteht,
d) 0 bis 40 Gew.-%, vorzugsweise 0 bis 20 Gew.-% eines oder mehrerer Netzmittel vorzugsweise aus der Gruppe der Alkansulfonate, Alkylnaphthalinsulfonate, Alkylbenzolsulfonate, Alkylpolyglykolethersulfonate, Alkylsulfobernsteinsäurehalbester, Fettsäure-N-methyltauride oder Gemische der vorstehenden Netzmittel,
e) 0 bis 20 Gew.-%, Vorzugsweise 5 bis 15 Gew.-% übliche Formulierungshilfsmittel aus der Gruppe der Füllmittel, Penetrationsförderer, Haftmittel und Antischaummittel
enthalten.

Durch Zusatz fein gemahlener fester Wirkstoffe ist es auch möglich, das Prinzip des wasseremulgierbaren Granulats mit dem des wasserdispergierbaren Granulats zu kombinieren. Die Erfindung betrifft daher auch Granulate, in denen neben dem oben beschriebenen Prinzip weitere Wirkstoffe in fester, feinverteilter Form enthalten sind. Diese Methode kann besonders dann von Nutzen sein, wenn ein in organischen Lösungsmitteln nur schlecht löslicher Wirkstoff mit einem Wirkstoff kombiniert werden soll, für dessen optimale biologische Wirkung ein aromatisches Lösungsmittel als Penetrationsförderer erforderlich oder vorteilhaft ist.

Ein weiterer, besonderer Vorteil dieses Verfahrens liegt in der dadurch möglichen Kombinierbarkeit von miteinander nicht mischbaren oder sich gegenseitig beeinträchtigenden Wirkstoffen. So können verschiedene Wirkstoffe, die sich gegenseitig oder auch durch äußere Einflüsse, wie z. B. infolge Hydrolyse oder Oxydation verändern würden, problemlos kombiniert werden.

Häufig mußten bisher Kombinationen von untereinander unverträglichen Wirkstoffen entweder ganz unterbleiben oder nach getrennter Lagerung erst unmittelbar vor der Applikation, bei Pflanzenschutzmitteln z.B. durch Mischen im Sprühtank, erzeugt werden.

Generell können für diese Zubereitungen auch solche Wirkstoffe eingesetzt werden, die sich aufgrund ihres niedrigen Schmelzpunktes nur schlecht oder gar nicht mit Hilfe von Mahlvorrichtungen in eine feindisperse wäßrige Phase überführen lassen oder auch solche Wirkstoffe, bei denen der Mahlvorgang besondere Sicherheitsvorkehrungen erfordert.

Als einzusetzende pestizide Wirkstoffe kommen Herbizide und Safener, Insektizide, Fungizide, Akarizide, Nematizide, Pheromone oder Repellents in Betracht, wobei diese in Wasser nicht oder nur in geringem Maße löslich sein sollen. Feste Wirkstoffe sollen jedoch eine gute bis sehr gute Löslichkeit in einem der untengenannten organischen Lösungsmittel aufweisen.

Bei den Herbiziden kommen insbesondere blattwirksame Herbizide in Frage, die ihr biologisches Potential vornehmlich oder besser in gelöster Form entfalten, jedoch als Festformulierungen zum Einsatz kommen sollen. Geeignete herbizide Wirkstoffe sind beispielsweise Phenoxyphenoxy- oder Heteroaryloxyphenoxypropionsäurealkylester wie α-4-(2'4'-Dichlorphenoxy)-phenoxy-propionsäuremethylester [common name: Diclofopmethyl] (A), Ethyl-2-[4-(6-chlor-2-benzthiazolyloxy)phenoxy]-propionat (B) oder Ethyl-2-[4-(6-chlor-2-benzoxazolyloxy)phenoxy)-propionat (common name: Fenoxaprop-P-ethyl) (C), Dinitroanilinverbindung wie 2,6-Dinitro-4-trifluormethyl-N,N-dipropylanilin [common name: Trifluralin] (D) oder 2,6-Dinitro-4-isopropyl-N,N-dipropylanilin [common name: Isopropalin] (E), Hydroxybenzonitrilderivate wie 2,6-Dibrom-4-hydroxybenzonitriloctanoat (F), Dinitrophenolverbindungen wie 2-sec.Butyl-4,6-dinitrophenol [common name: Dinoterb] (G).

Als Safener sind beispielsweise die in EP-A-86750, EP-A-94349, EP-A-191736, EP-A-346620, EP-A-333131, EP-A-269806, EP-A-159290, DE-A-2546845, PCT/EP-90/02020 und PCT/EP-90/01966 beschriebenen Verbindungen geeignet.

Geeignete Insektizide sind beispielsweise 1,4,5,6,7,7-Hexachlor-8,9,10-trinorborn-5-en-2,3-ylendi-methyl-sulfit [common name: Endosulfan], 2-(1-Methyl-n-propyl)-4,6-dinitrophenyl-3-methylcrotonat [common name: Binapacryl], Phosphorsäureester wie O,O-Diethyl-O-1 - phenyl-1H-1,2,4-triazol-3-yl-phosphor-thioat [common name: Triazophos] oder Pyrethroide wie (S)-α-Cyano-3-phenoxybenzyl(1R,3R)-3-(2,2-dibromovinyl)-2,2-dimethylcyclopropancarboxylat [common name: Deltamethrin], Acrinathrin, Allethrin, Alphamethrin, Bioallethrin, ((S)-Cyclopentenyl-Isomer), Bioresmethrin, Cycloprothrin, Cyfluthrin, Cyhalothrin, Cypermethrin, α-Cyano-3-phenyl-2-methylbenzyl 2,2-dimethyl-3-(2-chloro-2-trifluoromethylvinyl)-cyclopropanecarboxylat (FMC 54800), Fenpropathrin, Fenfluthrin, Flumethrin, Permethrin, Resmethrin oder Tralomethrin. Acrinathrin, Tralomethrin, Bioresmethrin, Permethrin und Cypermethrin sind bevorzugte Pyrethroide; insbesonders bevorzugt ist Deltamethrin.

Ein weiteres geeignetes Insektizid ist (4-Ethoxyphenyl)-[3-(4-fluor-3-phenoxy-phenyl)propyl]-dimethyl-silan (Silafluofen).

Die genannten Pyrethroide sind beispielsweise bekannt aus den GB-Patenten 1 413 491, 1 168 797, 1 168 798 und 1 168 799, FR-Patent 2 364 884 oder EP-A-48 186. Den Pyrethroiden kann man sogenannte Synergisten, wie Piperonylbutoxid, Sesamex, Sesamöl, Sulfoxid, MGK oder Octachlordipropylether beimengen.

Als geeignetes Fungizid ist beispielsweise zu nennen Ethyl-2-diethoxythiophosphoryloxy-5-methyl-pyrazolo[1,5 a]pyrimidin-6-carboxylat [common name: Pyrazophos], ferner als Pheromon die Verbindungen (E)-8-(E)-10-Dodecadienol oder (Z)-7,8-Epoxy-2-methyloctadecan und als Repellent Phthalsäuredimethylester.

Die obengenannten Herbizide (Verbindung (B) ausgenommen), Insektizide sowie das Repellent sind aus H. Martin, Pesticide Manual 6th edition 1979, bekannt. Die Herbizide (B) und (C) sind in DE-A-2640730, die beiden Pheromone in M. Beroza, Chem. Controlling Insect Behaviour, Academic Press, N.Y. 1970, beschrieben.

Gegebenenfalls einzusetzende zusätzliche Dispergiermittel sind vorzugsweise Lignosulfonate, Na-Salze von Dinaphthylmethandisulfonsäuren, das Na-Salz einer Sulfonsäure aus Kresol, Formaldehyd, Na-sulfit und Oxynaphthalinsulfonsäure, das Na-Salz einer Sulfonsäure aus m-Kresol, Formaldehyd und Na-Sulfit, Kondensationsprodukte aus Arylsulfonsäuren und Formaldehyd-Na-Salzen, Triethanolaminsalze von phosphorylierten Polystyrylphenylpolyethylenoxiden, Polyvinylalkohol, dodecylbenzolsulfonsaures Calcium sowie Alkylnaphthalinsulfonate unterschiedlicher Alkylkettenlänge.

Gegebenenfalls einzusetzende zusätzliche Emulgatoren sind nichtionische, anionische oder kationische oberflächenaktive Stoffe, wobei vorwiegend Mischungen von nichtionischen mit anionischen Komponeten verwendet werden. Verwendbar sind aber auch Kombinationen aus nichtionischen und kationischen oberflächenaktiven Mitteln. Zu den bevorzugt eingesetzten Emulgatoren gehören Phenylsulfonat-Calcium, ethoxylierte Nonylphenole, ethoxylierte aliphatische Alkohole, ethoxyliertes Rizinusöl, Fettsäurepolyglykolester, Propylenglykol-Ethylenglykol-Blockpolymerisate sowie Gemische derselben, sowie phosphorylierte Ethylenglykol-propylenglykol-ethylenglykol-Blockpolymerisate.

Als organische Lösungsmittel eignen sich vorwiegend hochsiedende Aromaten, wie z.B. 1- oder 2-Methylnaphthalin, Dimethylnaphthaline oder andere mehrkernige Aromaten. Geeignet sind aber auch andere mit Wasser nicht mischbare Lösungsmittel, z.B. Aromaten, wie Alkylbenzole, Xylole, Aliphaten, wie Paraffinöle, pflanzliche Öle, Alicyclen, Alkanole, wie Cyclohexanol, Isooctylalkohol, Ether, Ketone, wie Cyclohexanon, 4-Methylcyclohexanon, Isophoron, Ester, wie Benzoesäureethylester und Tri-n-butylphosphat. Flüssige pestizide Wirkstoffe können auch ohne organische Lösungsmittel eingesetzt werden.

Bei den hüll- und strukturbildenden Materialien handelt es sich durch Verseifung, vorzugsweise Teilverseifung von Polyvinylacetat erhaltenene Polyvinylalkohole oder deren Gemische mit einem Hydrolysegrad von vorzugsweise 72 bis 99 Mol-% und einer Viskosität von vorzugsweise 2 bis 18 cP¹ gemessen in 4%iger wäßriger Lösung bei 20°C (z.B. ®Mowiol-Typen). Die für die vorliegende Erfindung bevorzugten Polyvinylalkohole weisen eine Molmasse von vorzugsweise 10000 bis 200000 auf. Sie werden hergestellt durch teilweise vorzugsweise 72 bis 99 Mol-%ige alkalische Verseifung von entsprechenden Polyvinylacetaten.
¹ 1cP = 1 mPa·s

Zur praktischen Durchführung des Verfahrens wird zunächst die wäßrige Phase (Trägerphase) durch Einrühren des hüll- bzw. strukturbildenden Materials und des Netz- oder Dispergiermittels in Wasser hergestellt. Danach wird der zu emulgierende Wirkstoff in dem Lösungsmittel gelöst und unter mäßigem Rühren in der wäßrigen Phase dispergiert. Während dieses Vorganges können zusätzliche Formulierungshilfsmittel oder auch fein gemahlene feste Wirkstoffe zugesetzt werden.

Das Dispergieren kann durch einen Rühr- oder gegebenenfalls auch Schüttevorgang erfolgen, wobei man sich der allgemein gebräuchlichen technischen Vorrichtungen bedient. Dazu gehören z.B. Rührkessel mit Intensivrührer oder auch röhrenförmige Reaktoren mit den dafür geeigneten Rühreinheiten. Die Zugabe kann diskontinuierlich oder, bei Verwendung entsprechender Aggregate, auch kontinuierlich erfolgen. Die Temperatur während des Dispergierens kann konstant gehalten, aber auch nach bestimmten Zeitabschnitten verändert werden. Sie sollte zweckmäßig im Bereich von 10 bis 80°C, vorzugsweise von 20 bis 50°C liegen.

Durch eine solche Verfahrensweise kann eine Dispersion der wasserunlöslichen Phase in der wäßrigen Polyvinylalkohollösung erzeugt werden, in der die entstandenen Tröpfchen, je nach Rühr- bzw. Dispergierintensität, einen Durchmesser von 1 bis 20, vorzugsweise 5 bis 10 µm besitzen.

Beim Rühren der Dispersion kann es gelegentlich zu störender Schaumbildung kommen. Diese läßt sich jedoch durch Zugabe eines geeigneten Antischaumittels, wie z.B. Triisobutylphosphat, Entschäumer SF oder Siliconentschäumer weitgehend unterdrücken.

Ergibt es sich als wünschenswert und zweckmäßig, einen bestimmten pH-Wert einzustellen, so kann dies vor, während oder auch noch nach dem Dispergiervorgang erfolgen. In den meisten Fällen kann jedoch auf eine solche zusätzliche Maßnahme verzichtet werden.

Die technische Herstellung der erfindungsgemäßen wasserdispergierbaren Granulate erfolgt beispielsweise nun in der Weise, daß die so zubereitete viskose Dispersion (Emulsion, Suspension oder Suspoemulsion) in einen Wirbelschicht-Trockner im Gegenstrom-Prinzip kontinuierlich eingegeben und auf diese Weise im erwärmten Luftstrom dem Produkt das Wasser entzogen wird. Um mögliche Schwierigkeiten, wie Fäden ziehen, Filmbildung an den Wänden des Trockenaggregats, Verkleben der Eintrittsöffnung und Bildung größerer Agglomerate zu vermeiden, sollte die Viskosität des hier verwendeten Eingangsproduktes zwischen 50 und 5000 cp, vorzugsweise zwischen 100 und 1000 cp liegen, abhängig von den gewählten Dosierbedingungen und Trocknungstemperaturen.

Dabei muß allerdings berücksichtigt werden, daß die Wiederauflösbarkeit des PVA-Films durch zu starke Wärmebehandlung deutlich herabgesetzt werden kann. Man arbeitet daher vorzugsweise mit Eingangstemperaturen von 100°C bis 150°C und Ausgangstemperaturen von 40° bis 60°C und sorgt dafür, daß das getrocknete, fertige Granulat nicht an den Wänden des Trockenaggregats längere Zeit thermisch belastet wird. Durch den vorgenannten Trocknungsprozeß läßt sich dem Granulat das Wasser bis zu einem Restfeuchtegehalt von weniger als 0,5 Gew.-% entziehen.

Das so erhaltene Granulat hat eine mittlere Partikelgröße von 0,3 bis 5 mm, vorzugsweise 0,5 bis 2 mm, ist frei fließend, nicht staubend, volumetrisch gut dosierbar und bildet in Wasser eine stabile Emulsion. Der Füllgut-Anteil beträgt 10 bis 90 Gew.-%, vorzugsweise 30 bis 75 Gew.-%.

Es läßt sich zeigen, daß die Eigenschaften der erfindungsgemäßen Produkte nach 3-monatiger Lagerung bei Raumtemperatur bzw. bei 50°C im wesentlichen unverändert sind.

Überraschenderweise lassen sich nach dem erfindungsgemäßen Verfahren insbesondere auch solche Wirkstoffe, die sich nach bekannten Methoden nur schwer oder gar nicht zu stabilen Emulsionskonzentraten formulieren lassen, in gut handhabbare emulgierbare Granulate überführen, die für die praktische Anwendung des Wirkstoffs durch einfaches Dispergieren in Wasser innerhalb weniger Minuten solvatisierbar sind und dabei sehr stabile anwendungsfertige Emulsionen bilden können, wobei überraschenderweise der als hüll- und strukturbildendes Material eingesetzte Polyvinylalkohol in wäßriger Lösung gleichzeitig als Netz- und Dispergier- bzw. Emulgiermittel wirkt und in manchen Fällen keine zusätzlichen Emulgiermittel benötigt werden. Die ganz oder teilweise wasserlöslichen hüll- und strukturbildenden Materialien (Polyvinylalkohol) wirken bei Anwendung der mit den erfindungsgemäßen Granulaten hergestellten Emulsionen auf der Pflanze zudem als Haftvermittler.

Es ist aber auch möglich, die erfindungsgemäßen wasseremulgierbaren Granulate von Fall zu Fall durch Zusatz weiterer Netzmittel, Dispergiermittel und/oder Emulgiermittel noch anwendungsspezifischer zu formulieren.

Damit eignet sich das erfindungsgemäße Verfahren in besonderer Weise zur Formulierung von Wirkstoffen für den Einsatz auf dem Gebiet des Pflanzenschutzes und der Schädlingsbekämpfung sowie auch für den chemisch-technischen Sektor.

Erfindungsgemäß kommen somit für diese Verfahren z. B. insbesondere alle flüssigen oder in einem organischen Lösungsmittel löslichen Pestizidwirkstoffe in Frage, die oder deren Lösungen mit Wasser nicht mischbar sind und deren Siedepunkte über dem des Wassers liegen.

Das Verfahren wird durch die nachfolgenden Beispiele erläutert, ohne daß die Erfindung darauf beschränkt wäre:

### Beispiel 1

100 g eines durch Teilverseifung von Polyvinylacetat hergestellten Polyvinylalkohols mit einer Viskosität von 3 cP (gemessen in 4%iger wäßriger Lösung bei 20°C) und einem Hydrolysegrad von 83 Mol-% werden in 500 g Wasser gelöst und unter kräftigem Rühren werden 50 g eines ebenso hergestellten Polyvinylalkohols mit einer Viskosität von 4 cP und einem Hydrolysegrad von 88 Mol-% langsam zugegeben.

In diese wäßrige Phase läßt man die Lösung von 90 g Fenoxaprop-P-ethyl in 260 g Methylnaphthalin unter weiterem Rühren einfließen und erhöht dann die Drehzahl des Rührers so stark, daß die in der wäßrigen Phase entstehenden Tröpfchen einen mittleren Durchmesser von 5 bis 10 µm erreichen.

Danach wird die Dispersion in einem Labor-Wirbelbett-Trockner eingedüst. Das so erhaltene wasseremulgierbare Granulat hat einen Partikel-Durchmesser von 0,5 bis 2 mm, ist nicht staubend, freifließend, volumetrisch gut dosierbar und in Wasser gut emulgierbar.

### Beispiel 2

8 kg eines durch Teilverseifung von Polyvinylacetat hergestellten Polyvinylalkohols mit einer Viskosität von 3 cP (gemessen in 4 %iger wäßriger Lösung bei 20°C) und einem Hydrolysegrad von 83 Mol.-% werden in 30 kg Wasser gelöst und unter kräftigem Rühren setzt man 1,5 kg Na-Alkylbiglykolethersulfat zu. Wenn das Salz gelöst ist, läßt man die Lösungen von 3 kg Fenoxaprop-ethyl und 1,5kg Fenchlorazole in 14 kg Methylennaphthalin einfließen und rührt so lange, bis die in der wäßrigen Phase entstehenden Tröpfchen einen mittleren Durchmesser von 5-10 µm erreichen

Danach wird die Dispersion in einem für diese Produkt-Mengen geeigneten Wirbelbett-Trockner eingedüst. Das so erhaltene wasseremulgierbare Granulat hat einen Partikel-Durchmesser von 0,5 bis 2,0 mm, ist nicht staubend, freifließend, volumetrisch gut dosierbar und bildet in Wasser eine stabile Emulsion.

### Beispiel 3

100 g eines durch Teilverseifung von Polyvinylacetat hergestellten Polyvinylalkohols mit einer Viskosität von 3 cP (gemessen in 4%iger wäßriger Lösung bei 20°C) und einem Hydrolysegrad von 83 Mol.-% werden in 600 g Wasser gelöst und unter kräftigem Rühren werden 50 g eines ebenso hergestellten Polyvinylalkohols mit einer Viskosität von 4 cP und einem Hydrolysegrad von 88 Mol-% langsam zugegeben. Danach setzt man 20 g eines zuvor in einer Perlmühle zu einer Partikelgröße von 1-5 µm gemahlenen Sulfonylharnstoff-Herbizids DPXL 5300 zu und homogenisiert die wäßrige Phase. In diese läßt man dann die Lösung von 60 g Fenoxaprop-P-ethyl und 30 g Fenchlorazole in 260 g Methylnaphthalin unter weiterem Rühren einfließen und erhöht dann die Drehzahl des Rührers, so daß die in der wäßrigen Phase entstehenden öligen Tröpfchen einen mittleren Durchmesser von 5-10 µm haben.

Danach wird die entstandene Suspoemulsion in einem Labor-Wirbelbett-Trockner eingedüst. Das so erhaltene wasserdispergierbare Granulat hat einen Partikeldurchmesser von 0,5-2 mm, hat die oben erwähnten guten anwendungstechnischen Eigenschaften und bildet in Wasser eine stabile Suspoemulsion.

### Beispiel 4

100 g eines durch Teilverseifung von Polyvinylacetat hergestellten Polyvinylalkohols mit einer Viskosität von 3 cP (gemessen in 4%iger wäßriger Lösung bei 20°C) und einem Hyrolysegrad von 83 Mol-% werden in 500 g Wasser gelöst und unter kräftigem Rühren werden 50 g eines ebenso hergestellten Polyvinylalkohols mit einer Viskosität von 4 cP und einem Hydrolysegrad von 88 Mol-% langsam zugegeben.

In diese wäßrige Phase läßt man die Lösung von 20 g Endosulfan in 30 g Methylnaphthalin einfließen und erhöht dann die Drehzahl des Rührers, so daß die in der wäßrigen Phase entstehenden öligen Tröpfchen einen mittleren Durchmesser von 5-10 µm haben.

Danach wird die Dispersion in einem Labor-Wirbelbett-Trockner eingedüst. Das so erhaltene wasseremulgierbare Granulat hat einen Partikeldurchmesser von 0,5-2 mm, besitzt die oben erwähnten guten anwendungstechnischen Eigenschaften und bildet in Wasser eine stabile Emulsion.

### Beispiel 5

100 g eines durch Teilverseifung von Polyvinylacetat hergestellten Polyvinylalkohols mit einer Viskosität von 3 cP (gemessen in 4 %iger wäßriger Lösung bei 20°C) und einem Hydrolysegrad von 83 Mol-% werden in 600 g Wasser gelöst. Unter kräftigem Rühren wurden 60 g eines ebenso hergestellten Polyvinylalkohol mit einer Viskosität von 4 cP und einem Hydrolysegrad von 88 Mol-% langsam zugegeben.

In diese wäßrige Phase läßt man die Lösung von 21 g Deltamethrin in 219 g Methylnaphthalin unter weiterem Rühren einfließen und erhöht dann die Drehzahl des Rührers so stark, daß die in der wäßrigen Phase entstehenden Tröpfchen einen mittleren Durchmesser von 5 bis 10 µm erreichen.

Danach wird die Dispersion in einem Labor-Wirbelbett-Trockner zu einem wasseremulgierbaren Granulat getrocknet, das einen Partikeldurchmeser von 0,5 bis 2 mm und die oben erwähnten guten anwendungstechnischen Eigenschaften hat. Nach Eintragen des Granulats in Wasser bildet sich eine stabile Emulsion.

### Beispiel 6

100 g eines durch Teilverseifung von Polyvinylacetat hergestellten Polyvinylalkohols mit einer Viskosität von 3 cP (gemessen in 4 %iger wäßriger Lösung bei 20°C) und einem Hydrolysegrad von 83 Mol-% werden in 600 g Wasser gelöst. Unter kräftigem Rühren wurden 60 g eines ebenso hergestellten Polyvinylalkohol mit einer Viskosität von 4 cP und einem Hydrolysegrad von 88 Mol-% langsam zugegeben.

In diese wäßrige Phase läßt man die Lösung von 50 g Silafluofen in 190 g Methylnaphthalin unter weiterem Rühren einfließen und erhöht dann die Drehzahl des Rührers so stark, daß die in der wäßrigen Phase entstehenden Tröpfchen einen mittleren Durchmesser von 5 bis 10 µm erreichen.

Danach wird die Dispersion in einem Labor-Wirbelbett-Trockner granuliert. Das Granulat hat einen Partikeldurchmesser von 0,5 - 2 mm, die erwähnten guten anwendungstechnischen Eigenschaften und bildet nach Eintragen in Wasser eine stabile Emulsion.

## Patentansprüche (Patentansprüche für folgende(n) Vertragsstaat(en): AT, BE, CH, DE, DK, FR, GB, GR, IT, LI, NL, PT, SE)

1. In Wasser emulgierbares Granulat, mit einem mittleren Partikeldurchmesser von 0,3 bis 5 mm, enthaltend
2 bis 70 Gew.-% mindestens eines in Wasser nicht oder nur gering löslichen pestiziden Wirkstoffs,
20 bis 80 Gew.-% eines hochsiedenden Lösungsmittels oder Lösungsmittelgemisches und
10 bis 80 Gew.-% eines zumindest teilweise wasserlöslichen hüll- und strukturbildenden Materials, das im wesentlichen aus einem durch Teilverseifung von Polyvinylacetat erhaltenen Polyvinylalkohol mit einem Hydrolysegrad von 72 bis 99 Mol-% und einer Viskosität von 2 bis 18 cP gemessen in 4 %iger wäßriger Lösung bei 20°C oder einem Gemisch solcher Polyvinylalkohole besteht.

2. Granulat gemäß Anspruch 1, welches 0 bis 20 Gew.-% eines oder mehrerer Netzmittel und 0 bis 20 Gew.-% übliche Formulierungshilfsmittel enthält.

3. Granulat gemäß Anspruch 1 oder 2, in welchem ein Teil des oder der Wirkstoffe fest in feinvermahlener Form, ein anderer Teil in gelöster Form vorliegt.

4. Granulat gemäß einem der Ansprüche 1 bis 3, welches
10 bis 40 Gew.-% mindestens eines pestiziden Wirkstoffs,
20 bis 60 Gew.-% eines hochsiedenden Lösungsmittels oder Lösungsmittelsgemisches,
30 bis 60 Gew.-% mindestens eines durch Teilverseifung von Polyvinylacetat erhaltenen Polyvinylalkohols,
0 bis 20 Gew.-% eines oder mehrerer Netzmittel und
5 bis 15 Gew.-% übliche Formulierungshilfsmittel enthält.

5. Granulat gemäß einem der Ansprüche 1 bis 4, welches mindestens einen Wirkstoff aus der Reihe der Herbizide, Insektizide, Fungizide, Akarizide Nematizide, Pheromone und Repellents und gegebenenfalls mindestens einen Safener enthält.

6. Granulat gemäß Anspruch 5, bei welchem das blattwirksame Herbizid aus der Reihe jener ausgewählt ist, die ihr biologisches Potential vorzugsweise in gelöster Form entfalten, und welches gegebenenfalls mindestens einen Safener enthält.

7. Granulat gemäß Anspruch 5, enthaltend Fenoxaprop-P-ethyl oder dessen Razemat.

8. Granulat gemäß Anspruch 5, enthaltend mindestens einen Wirkstoff aus der Reihe der Insektizide.

9. Granulat gemäß Anspruch 8, enthaltend mindestens einen Wirkstoff aus der Reihe der Pyrethroide.

10. Granulat gemäß Anspruch 9, enthaltend Deltamethrin.

11. Granulat gemäß Anspruch 8, enthaltend Silafluofen.

12. Verfahren zur Herstellung eines Granulats gemäß einem der Ansprüche 1 bis 11, dadurch gekennzeichnet, daß man einer wäßrigen Dispersion der Komponenten des Granulats in einem Wirbelbettschicht-Trockner das Wasser entzieht.

13. Verwendung eines Granulats gemäß einem der Ansprüche 1 bis 11 zur Herstellung wäßriger Zubereitungen von pestiziden Wirkstoffen.

## Patentansprüche (Patentansprüche für folgende(n) Vertragsstaat(en): ES)

1. Verfahren zur Herstellung eines in Wasser emulgierbaren Granulats, mit einem mittleren Partikeldurchmesser von 0,3 bis 5 mm, enthaltend
2 bis 70 Gew.-% mindestens eines in Wasser nicht oder nur gering löslichen pestiziden Wirkstoffs,
20 bis 80 Gew.-% eines hochsiedenden Lösungsmittels oder Lösungsmittelgemisches und
10 bis 80 Gew.-% eines zumindest teilweise wasserlöslichen hüll- und strukturbildenden Materials, das im wesentlichen aus einem durch Teilverseifung von Polyvinylacetat erhaltenen Polyvinylalkohol mit einem Hydrolysegrad von 72 bis 99 Mol-% und einer Viskosität von 2 bis 18 cP gemessen in 4 %iger wäßriger Lösung bei 20°C oder einem Gemisch solcher Polyvinylalkohole besteht, dadurch gekennzeichnet daß man einer waßrigen Dispersion der Komponenten des Granulats in einer geeigneten Vorrichtung wie z.B. einem Wirbelschicht-Trockner das Wasser entzieht.

2. Verfahren gemäß Anspruch 1 bei dem ein Granulat hergestellt wird, welches 0 bis 20 Gew.-% eines oder mehrerer Netzmittel und 0 bis 20 Gew.-% übliche Formulierungshilfsmittel enthält.

3. Verfahren gemäß Anspruch 1 oder 2, bei dem ein Granulat hergestellt wird, in welchem ein Teil des oder der Wirkstoffe fest in feinvermahlener Form, ein anderer Teil in gelöster Form vorliegt.

4. Verfahren gemäß einem der Ansprüche 1 bis 3. bei dem ein Granulat hergestellt wird, welches
10 bis 40 Gew.-% mindestens eines pestiziden Wirkstoffs,
20 bis 60 Gew.-% eines hochsiedenden Lösungsmittels oder Lösungsmittelsgemisches,
30 bis 60 Gew.-% mindestens eines durch Teilverseifung von Polyvinylacetat erhaltenen Polyvinylalkohols,
0 bis 20 Gew.-% eines oder mehrerer Netzmittel und
5 bis 15 Gew.-% übliche Formulierungshilfsmittel enthält.

5. Verfahren gemäß einem der Ansprüche 1 bis 4, bei dem ein Granulat hergestellt wird, welches mindestens einen Wirkstoff aus der Reihe der Herbizide, Insektizide, Fungizide, Akarizide, Nematizide, Pheromone und Repellents und gegebenenfalls mindestens einen Safener enthält.

6. Verfahren gemäß Anspruch 5 zur Herstellung eines Granulats, bei welchem das blattwirksame Herbizid aus der Reihe jener ausgewählt ist, die ihr biologisches Potential vorzugsweise in gelöster Form entfalten, und welches gegebenenfalls mindestens einen Safener enthält.

7. Verfahren gemäß Anspruch 5 zur Herstellung eines Granulats, enthaltend Fenoxaprop-P-ethyl oder dessen Razemat.

8. Verfahren gemäß Anspruch 5 zur Herstellung eines Granulats, enthaltend mindestens einen Wirkstoff aus der Reihe der Insektizide.

9. Verfahren gemäß Anspruch 8 zur Herstellung eines Granulats, enthaltend mindestens einen Wirkstoff aus der Reihe der Pyrethroide.

10. Verfahren gemäß Anspruch 9 zur Herstellung eines Granulats, enthaltend Deltamethrin.

11. Verfahren gemäß Anspruch 8 zur Herstellung eines Granulats, enthaltend Silafluofen.

12. Verwendung eines Granulats gemäß einem der Ansprüche 1 bis 11 zur Herstellung wäßriger Zubereitungen von pestiziden Wirkstoffen.

## Claims (Claims for the following Contracting State(s): AT, BE, CH, DE, DK, FR, GB, GR, IT, LI, NL, PT, SE)

1. Water-emulsifiable granules having an average particle diameter of 0.3 to 5 mm, containing
2 to 70% by weight of at least one pesticidal active substance which is not, or only sparingly, soluble in water,
20 to 80% by weight of a high-boiling solvent or solvent mixture and
10 to 80% by weight of an at least partially water-soluble shell-forming structural material which is essentially composed of a polyvinyl alcohol obtained by partial hydrolysis of polyvinyl acetate and having a degree of hydrolysis of 72 to 99 mol% and a vicosity of 2 to 18 cP, measured in 4% strength aqueous solution at 20°C, or of a mixture of such polyvinyl alcohols.

2. Granules as claimed in claim 1, which contain 0 to 20% by weight of one or more wetting agents and 0 to 20% by weight of customary formulation adjuvants.

3. Granules as claimed in claim 1 or 2, in which some of the active substance, or active substances, is present in finely-ground, solid form and some in dissolved form.

4. Granules as claimed in any one of claims 1 to 3, which contain
10 to 40% by weight of at least one pesticidal active substance,
20 to 60% by weight of a high-boiling solvent or solvent mixture,
30 to 60% by weight of at least one polyvinyl alcohol obtained by partial hydrolysis of polyvinyl acetate,
0 to 20% by weight of one or more wetting agents and 5 to 15% by weight of customary formulation adjuvants.

5. Granules as claimed in any one of claims 1 to 4, which contain at least one active substance selected from the series comprising the herbicides, insecticides, fungicides, acaricides, nematicides, pheromones and repellents and, if appropriate, at least one safener.

6. Granules as claimed in claim 5, in which the leaf-acting herbicide is selected from the series comprising those which unfold their biological potential preferentially in dissolved form, and which, if appropriate, contain at least one safener.

7. Granules as claimed in claim 5, containing fenoxaprop-P-ethyl or a racemate thereof.

8. Granules as claimed in claim 5, containing at least one active substance selected from the series comprising the insecticides.

9. Granules as claimed in claim 8, containing at least one active substance selected from the series comprising the pyrethroids.

10. Granules as claimed in claim 9, containing deltamethrin.

11. Granules as claimed in claim 8, containing silafluofen.

12. A process for the preparation of granules as claimed in any one of claims 1 to 11, which comprises removing the water from an aqueous dispersion of the components of the granules in a fluidized bed drier.

13. The use of granules as claimed in any one of claims 1 to 11 for preparing aqueous preparations of pesticidal active substances.

## Claims (Claims for the following Contracting State(s): ES)

1. A process for the preparation of water-emulsifiable granules, having an average particle diameter of 0.3 to 5 mm, containing
2 to 70% by weight of at least one pesticidal active substance which is not, or only sparingly, soluble in water,
20 to 80% by weight of a high-boiling solvent or solvent mixture and
10 to 80% by weight of an at least partially water-soluble shell-forming structural material which is essentially composed of a polyvinyl alcohol obtained by partial hydrolysis of polyvinyl acetate, and having a degree of hydrolysis of 72 to 99 mol% and a viscosity of 2 to 18 cP, measured in 4% strength aqueous solution at 20°C, or of a mixture of such polyvinyl alcohols, which comprises removing the water from an aqueous dispersion of the components of the granules in a suitable apparatus, for example a fluidized bed drier.

2. The process as claimed in claim 1, in which granules are prepared which contain 0 to 20% by weight of one or more wetting agents and 0 to 20% by weight of customary formulation adjuvants.

3. The process as claimed in claim 1 or 2, in which granules are prepared in which some of the active substance, or active substances, is present in finely-ground, solid form and some in dissolved form.

4. The process as claimed in any one of claims 1 to 3, in which granules are prepared which contain
10 to 40% by weight of at least one pesticidal active substance,
20 to 60% by weight of a high-boiling solvent or solvent mixture,
30 to 60% by weight of at least one polyvinyl alcohol obtained by partial hydrolysis of polyvinyl acetate,
0 to 20% by weight of one or more wetting agents and 5 to 15% by weight of customary formulation adjuvants.

5. The process as claimed in any one of claims 1 to 4, in which granules are prepared which contain at least one active substance selected from the series comprising the herbicides, insecticides, fungicides, acaricides, nematicides, pheromones and repellents and, if appropriate, at least one safener.

6. The process as claimed in claim 5 for the preparation of granules in which the leaf-acting herbicide is selected from the series comprising those which unfold their biological potential preferentially in dissolved form, and which, if appropriate, contain at least one safener.

7. The process as claimed in claim 5 for the preparation of granules containing fenoxaprop-P-ethyl or a racemate thereof.

8. The process as claimed in claim 5 for the preparation of granules containing at least one active substance selected from the series comprising the insecticides.

9. The process as claimed in claim 8 for the preparation of granules containing at least one active substance selected from the series comprising the pyrethroids.

10. The process as claimed in claim 9 for the preparation of granules containing deltamethrin.

11. The process as claimed in claim 8 for the preparation of granules containing silafluofen.

12. The use of granules as claimed in any one of claims 1 to 11 for preparing aqueous preparations of pesticidal active substances.

## Revendications (Revendications pour l'(les) Etat(s) contractant(s) suivant(s): AT, BE, CH, DE, DK, FR, GB, GR, IT, LI, NL, PT, SE)

1. Granulés émulsionnables dans l'eau, avec un diamètre moyen de particules de 0,3 à 5 mm, contenant
2 à 70% en poids d'au moins une substance pesticide active insoluble ou seulement peu soluble dans l'eau,
20 à 80% en poids d'un solvant ou d'un mélange de solvants à haut point d'ébullition et
10 à 80% en poids d'un matériau enrobant et structurant au moins partiellement hydrosoluble, qui est essentiellement constitué d'un alcool polyvinylique obtenu par saponification partielle de polyacétate de vinyle, avec un degré d'hydrolyse de 72 à 99% en mole et une viscosité de 2 à 18 cP mesurée à 20°C en solution aqueuse à 4%, ou d'un mélange de tels alcools polyvinyliques.

2. Granulés selon la revendication 1, qui contiennent de 0 à 20% en poids d'un ou de plusieurs agents mouillants et de 0 à 20% en poids d'additifs de formulation usuels.

3. Granulés selon la revendication 1 ou 2, dans lesquels une partie du ou des substances actives se présente sous forme solide finement broyée, une autre partie sous forme dissoute.

4. Granulés selon l'une des revendications 1 à 3, qui contiennent
10 à 40% en poids d'au moins une substance pesticide active,
20 à 60% en poids d'un solvant ou mélange de solvants de point d'ébullition élevé,
30 à 60% en poids d'au moins un alcool polyvinylique obtenu par saponification partielle de polyacétate de vinyle,
0 à 20% en poids d'un ou de plusieurs agents mouillants et
5 à 15% en poids d'additifs usuels de formulation.

5. Granulés selon l'une des revendications 1 à 4, qui contiennent au moins une substance active choisie parmi les herbicides, les insecticides, les fongicides, les acaricides, les nématocides, les phéromones et les produits répulsifs et le cas échéant au moins un antidote.

6. Granulés selon la revendication 5, dans lesquels l'herbicide actif au niveau des feuilles est choisi parmi ceux qui développent leur potentiel biologique de préférence sous forme dissoute, et qui le cas échéant contiennent au moins un antidote.

7. Granulés selon la revendication 5, contenant du fénoxaprop-P-éthyl ou son mélange racémique.

8. Granulés selon la revendication 5, contenant au moins une substance active choisie parmi les insecticides.

9. Granulés selon la revendication 8, contenant au moins une substance active choisie parmi les pyréthroïdes.

10. Granulés selon la revendication 9, contenant du deltaméthrin.

11. Granulés selon la revendication 8, contenant du silafluofen.

12. Procédé de préparation de granulés selon une des revendications 1 à 11, caractérisé en ce que l'on extrait l'eau d'une dispersion aqueuse des composants des granulés dans un sécheur à lit fluidisé.

13. Utilisation de granulés selon l'une des revendications 1 à 11 pour la fabrication de préparations aqueuses de substances actives pesticides.

## Revendications (Revendications pour l'(les) Etat(s) contractant(s) suivant(s): ES)

1. Procédé de fabrication de granulés émulsionnables dans l'eau, avec un diamètre moyen de particules de 0,3 à 5 mm, contenant
2 à 70% en poids d'au moins une substance pesticide active insoluble ou seulement peu soluble dans l'eau,
20 à 80% en poids d'un solvant ou d'un mélange de solvants à haut point d'ébullition et
10 à 80% en poids d'un matériau enrobant et structurant au moins partiellement hydrosoluble, qui est essentiellement constitué d'un alcool polyvinylique obtenu par saponification partielle de polyacétate de vinyle, avec un degré d'hydrolyse de 72 à 99% en mole et une viscosité de 2 à 18 cP mesurée à 20°C en solution aqueuse à 4%, ou d'un mélange de tels alcools polyvinyliques, caractérisé en ce que l'on extrait l'eau d'une dispersion aqueuse des composants des granulés dans un dispositif approprié comme par exemple un sécheur à lit fluidisé

2. Procédé selon la revendication 1, par lequel on fabrique des granulés qui contiennent de 0 à 20% en poids d'un ou de plusieurs agents mouillants et de 0 à 20% en poids d'additifs de formulation usuels.

3. Procédé selon la revendication 1 ou 2, par lequel on fabrique des granulés, dans lesquels une partie du ou des substances actives se présente sous forme solide finement broyée, une autre partie sous forme dissoute.

4. Procédé selon l'une des revendications 1 à 3, par lequel on fabrique des granulés, qui contiennent
10 à 40% en poids d'au moins une substance pesticide active,
20 à 60% en poids d'un solvant ou mélange de solvants de point d'ébullition élevé,
30 à 60% en poids d'au moins un alcool polyvinylique obtenu par saponification partielle de polyacétate de vinyle,
0 à 20% en poids d'un ou de plusieurs agents mouillants et
5 à 15% en poids d'additifs usuels de formulation.

5. Procédé selon l'une des revendications 1 à 4, par lequel on fabrique des granulés, qui contiennent au moins une substance active choisie parmi les herbicides, les insecticides, les fongicides, les acaricides, les nématocides, les phéromones et les produits répulsifs et le cas échéant au moins un antidote.

6. Procédé de fabrication de granulés selon la revendication 5, dans lesquels l'herbicide actif au niveau des feuilles est choisi parmi ceux qui développent de préférence leur potentiel biologique sous forme dissoute, et qui le cas échéant contiennent au moins un antidote.

7. Procédé de fabrication de granulés selon la revendication 5, contenant du fénoxaprop-P-éthyl ou son mélange racémique.

8. Procédé de fabrication de granulés selon la revendication 5, contenant au moins une substance active choisie parmi les insecticides.

9. Procédé de fabrication de granulés selon la revendication 8, contenant au moins une substance active choisie parmi les pyréthroïdes.

10. Procédé de fabrication de granulés selon la revendication 9, contenant du deltaméthrin.

11. Procédé de fabrication de granulés selon la revendication 8, contenant du silafluofen.

12. Utilisation de granulés selon l'une des revendications 1 à 11 pour la fabrication de préparations aqueuses de substances actives pesticides.
